# EUROPÄISCHE PATENTSCHRIFT

(11) **EP 1 462 292 B1**
(45) Veröffentlichungstag und Bekanntmachung des Hinweises auf die Patenterteilung: **26.11.2008**
(21) Anmeldenummer: 04006136.8
(22) Anmeldetag: 15.03.2004
(51) Int. Cl.: B60K 23/08, B60K 17/346

(54) **Steuersystem zur variablen Drehmomentenverteilung**
Variable torque distribution control system
Système de contrôle de distribution variable du couple

(30) Priorität: 22.03.2003 DE 10312879
(43) Veröffentlichungstag der Anmeldung: 29.09.2004
(73) Patentinhaber: Bayerische Motoren Werke Aktiengesellschaft, 80809 München (DE)
(72) Erfinder: Fischer, Gerhard, 80992 München (DE); Billig, Christian, 80939 München (DE)

(56) Entgegenhaltungen:
- EP-A- 0 352 994
- EP-A- 0 424 054
- EP-A- 0 546 733
- WO-A-02/36383
- DE-A- 10 054 023
- GB-A- 2 365 084
- US-A- 5 450 919

## Beschreibung

Die Erfindung bezieht sich auf ein Steuersystem zur variablen Drehmomentverteilung für ein zumindest teilweise vierradgetriebenes Fahrzeug.

Ein derartiges Steuersystem ist beispielsweise in der EP 0 911 205 A2 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre. Durch die Festlegung eines Drehmomentverteitungsverhältnisses kann das Fahrverhalten eines Fahrzeuges erheblich beeinflusst werden. Beim Gegenstand der EP 0 911 205 A2 wird die Änderung des Drehmomentverteilungsverhältnisses in Abhängigkeit von der Betätigung des Bremspedals und des Fahrpedals vorgenommen.

Weiterhin ist aus der DE 100 54 023 A1 ein ähnliches Steuersystem zur variablen Drehmomentverteilung bekannt, bei der die Änderung des Drehmomentverteilungsverhältnisses in Abhängigkeit von fahrdynamischen Größen (z. B. Lenkwinkel, Drehrate, Querbeschleunigung) vorgenommen wird, durch die ein Übersteuern bzw. Untersteuern des Fahrzeuges erkennbar ist.

Weiterhin sind allradgetriebene Fahrzeuge mit Fahrdynamikregelsystemen in Form von Antriebsmomentregelungssystemen und/oder Bremsmomentregelungssystemen bekannt.

Zum weiteren technischen Hintergrund wird auf die EP 0 352 994 A1 hingewiesen, aus der ein System bekannt ist, bei dem mittels digitalen Schaltsignalen zwischen Vorderrad-, Hinterrad- und Allradantrieb umgeschaltet werden kann.

In der EP 0 352 994 A1 ist ein Steuersystem zur variablen Dhrehmomentverteilung mittels Längssperren beschrieben.

Es ist Aufgabe der Erfindung, ein Steuersystem zum Verändern des Drehmomentverteilungsverhältnisses eingangs genannter Art im Hinblick auf die Flexibilität der Steuerung zu verbessern.

Diese Aufgabe wird durch die Merkmale des Patentanspruchst gelöst Vorteilhafte Weiterbildungen sind die Gegenstände der abhängigen Ansprüche.

Der Erfindung liegt die Erkenntnis zugrunde, dass mit bekannten Steuersystemen eine Drehmomentverteilung nicht in allen Fahrsituationen (z.B. Kurvenfahrt) möglich ist, da hierbei bisher zumindest der Schlupf der Räder zwischen der Vorderachse und der Hinterachse zu berücksichtigen ist. Mit einem Steuersystem, das eine schlupf- und reibwertunabhängige Drehmomentverteilung erlaubt, ist eine flexiblere aktive Beeinflussung der Fahrdynamik insbesondere im Hinblick auf ein Übersteuern oder Untersteuern möglich.

Daher weist erfindungsgemäß ein Steuersystem zur variablen Drehmomentverteilung für ein zumindest teilweise vierradgetriebenes Fahrzeug eine erste, der Vorderachse zugeordnete regelbare Längssperre und eine zweite, der Hinterachse zugeordnete regelbare Längssperre auf, wobei die Antriebseinheit zur Übertragung des Antriebsmoments zwischen den beiden Längssperren eingreift. Vorzugsweise sind die Längssperren mittels eines elektronischen Steuergeräts regelbar.

Mit dieser erfindungsgemäßen Anordnung der Antriebseinheit zwischen zwei regelbaren Längssperren ist eine fahrbahnreibwertunabhängige und reifenschlupfunabhängige Drehmomentverteilung mit einer variablen Verteilung für Vorder- und Hinterachse jeweils im Bereich von 0% bis 100% möglich; d.h.

| | | |
|---|---|---|
| Vorderachse: | 0% | 100% |
| Hinterachse: | 100% | 0% |

Die Reifenschlupfunabhängigkeit bezieht sich dabei insbesondere auf den Schlupf der Reifen zwischen den Rädern der Vorder- und Hinterachse. Damit ist es möglich, auf die jeweils schneller drehende Achse (z.B. aufgrund des geometrischen Schlupfes, aufgrund einer Kurvenfahrt oder aufgrund unterschiedlicher Reifendurchmesser der Räder von Vorder- und Hinterachse) zusätzlich Drehmoment aufzuprägen.

Das Steuergerät regelt dabei die Längssperren im Sinne einer Erhöhung und/oder Reduzierung des von ihr übertragenen Sperrmoments z. B. derart, dass das Fahrzeug ausgehend von einem über- bzw. untersteuernden Zustand wieder in den neutralen Zustand gebracht wird. Hierdurch wird die Stabilität des querdynamischen Verhaltens eines vierradgetriebenen Fahrzeuges erheblich erhöht.

Je nach Fahrphilosophie kann eine Grundauslegung des Fahrverhaltens zu mehr Untersteuern (Sicherheit im Vordergrund) oder zu mehr Übersteuern (Agilität und Sportlichkeit im Vordergrund) vorgesehen werden. Weiterhin kann ein manuell betätigbares Einstellmittel für den Fahrer vorgesehen werden, durch das eine individuelle Veränderung der Drehmomentverteilung möglich ist. Beispielsweise kann mittels eines Potentiometers ausgehend von einer Grundauslegung eine kontinuierliche Veränderbarkeit in die eine oder andere Fahrverhalten-"Richtung" ermöglicht werden. Alternativ kann mittels Taster eine programmmäßige Auswählbarkeit mehrer vorgegebener Fahrverhalten ermöglicht werden.

Das erfindungsgemäße Steuersystem stellt eine Erweiterung bzw. Überlagerung bereits bekannter Fahrdynamikregelsysteme in Form von Antriebsmoment- und Bremsmomentregelsystemen dar. Die Erfindung ist dabei vorzugsweise auch zum Teil in ein für die bekannten Fahrdynamikregelsysteme ohnehin vorhandenes Steuergerät integriert.

Durch die erfindungsgemäße Regelung der Längssperren findet auch eine Unterstützung eines Fahrdynamikregelsystems im Sinne einer Komfortverbesserung statt, da ein spürbarer Bremseingriff im Falle eines Übersteuerns bzw. ein spürbarer Motoreingriff zur Antriebsmomentreduzierung im Falle eines Untersteuerns später stattfinden kann.

Mit dem erfindungsgemäßen Steuersystem ergeben sich demnach ff. Vorteile:

Ein instabiles Fahrzeug kann stabilisiert werden, indem Drehmoment zwischen den beiden Achsen beliebig verschoben wird. Beim Übersteuern wird Drehmoment zur Vorderachse, beim Untersteuern wird Drehmoment zur Hinterachse geleitet. Dies kann im Unterschied zu bekannten Steuersystemen zur variablen Drehmomentverteilung radschlupf- und reibwertunabhängig erfolgen.

Je nach Radaufstandskräften (z. B. Ermittlung über mathematische Modelle und/oder Sensorik) lässt sich im Hinblick auf die Traktion eine ideale Drehmomentverteilung zwischen Vorder- und Hinterachse einstellen. Damit kann der physikalische Reibwert ideal ausgenutzt werden. Dies gilt sowohl in der Ebene als auch an Steigungen bzw. Gefällen bei Vorwärt- und Rückwärtsfahrt.

Lastwechselreaktionen bei Querbeschleunigung führen im allgemeinen zu einem instabilen Fahrverhalten. Mit dieser Erfindung kann ein stabilisierendes Giermoment durch geeignete Drehmomentverteilung zwischen Vorder- und Hinterachse eingeleitet werden oder sogar das Schleppmoment komplett von den Rädern abgekoppelt werden, wenn das Vorliegen einer definierten querdynamisch instabilen Bedingung (z. B. wenn die Querbeschleunigung über einer vorgegebenen Schwelle liegt) erkannt wird. Hierdurch kann sehr schnell ein neutrales Fahrverhalten hergestellt werden.

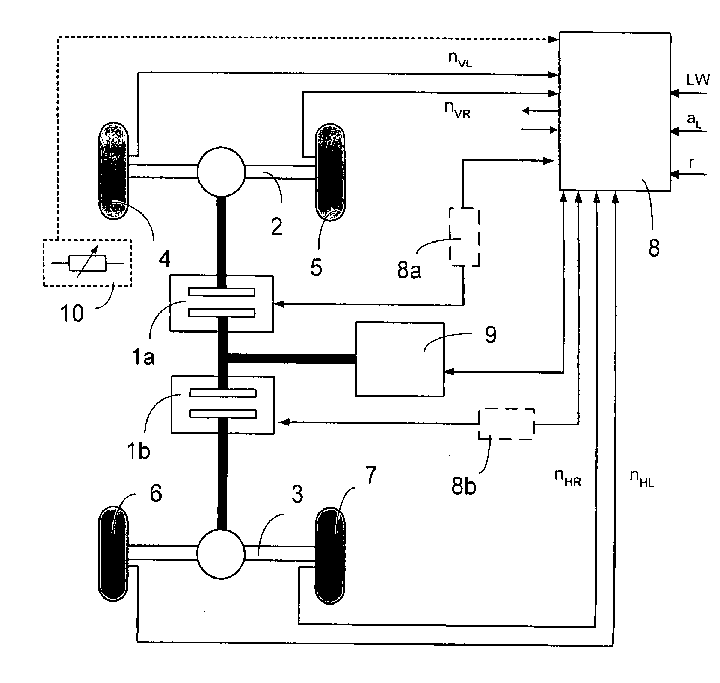

In der Zeichnung ist ein Ausführungsbeispiel der Erfindung dargestellt. Sie zeigt schematisch ein vierradgetriebenes Fahrzeug mit zwei regelbaren Längssperren zur Änderung der Drehmomentverteilung zwischen Vorder- und Hinterachse.

Ein schematisch dargestelltes Fahrzeug weist eine erste der Vorderachse 2 zugeordnete regelbare Längssperre 1 a und eine zweite der Hinterachse 3 zugeordnete regelbare Längssperre 1b auf. Die Antriebseinheit 9 zur Übertragung des Antriebsmoments greift zwischen den beiden Längssperren 1 a und 1b ein.

Die Längssperren 1 a und 1b sind mittels eines elektronischen Steuergeräts 8 regelbar. Zur Verteilung des Drehmoments bzw. Antriebsmoments der Antriebseinheit 9 auf die Vorderachse 2 und die Hinterachse 3 können zwischen dem elektronischen Steuergerät 8 als Hauptsteuergerät den Längssperren 1 a und 1b zugeordnete Hilfssteuereinheiten 8a und 8b vorgesehen sein. Die Längssperren 1 a und 1b sind beispielsweise regelbare Reibungskupplungen. Weiterhin weist das Fahrzeug je ein Querdifferenzial für die Vorderachse 2 und die Hinterachse 3 sowie vier Räder 4, 5, 6 und 7 auf.

Eine Antriebseinheit 9, bestehend aus einer Brennkraftmaschine, einem Getriebe und mindestens einem Antriebssteuergerät, treibt über die Längssperre 1 a die Räder 4 und 5 der Vorderachse 2 und über die Längssperre 1 b die Räder 6 und 7 der Hinterachse 3 an. Mit offener Längssperre 1 a und geschlossener Längssperre 1b wird beispielsweise das gesamte Drehmoment der Antriebseinheit 9 auf die Räder 6 und 7 der Hinterachse 3 übertragen. Mit geschlossener Längssperre 1 a und offener Längssperre 1 b wird das gesamte Drehmoment der Antriebseinheit 9 auf die Räder 4 und 5 der Vorderachse 2 übertragen. Ausgehend von einer Grundauslegung, bei der z. B. über die Vorderachse 2 ca. 40% und über die Hinterachse 3 ca. 60% des gesamten über die Antriebseinheit 9 zur Verfügung gestellten Antriebsmoments übertragen wird, kann erfindungsgemäß abhängig vom gewünschten Fahrverhalten die Drehmomentverteilung über den gesamten Bereich von 0% bis 100% für beide Achsen 2 und 3 unabhängig vom Schlupf der Vorderräder zu den Hinterrädern bzw. unabhängig vom Fahrbahnreibwert variiert werden. Extrema:

| | | |
|---|---|---|
| Vorderradantrieb mit | Vorderachse 2: 100%, | Hinterachse 3: 0% bzw. |
| Hinterradantrieb mit | Vorderachse 2: 0%, | Hinterachse 3: 100% |

Das Steuergerät 8 ist vorzugsweise Teil eines Fahrdynamikregelsystems, das eine Längssperrenregelung, eine Bremsregelung und eine Antriebsregelung umfasst. Dazu ist das Steuergerät 8 direkt oder indirekt über eine Hilfssteuereinheit 8a mit einem Aktuator der regelbaren Kupplung der Längssperre 1a, direkt oder indirekt über eine Hilfssteuereinheit 8b mit einem Aktuator der regelbaren Kupplung der Längssperre 1 b, mit den hier nicht dargestellten Bremsaktuatoren der Räder 4, 5, 6 und 7 und mit dem Antriebssteuergerät der Antriebseinheit 9 verbunden.

Die Hilfssteuereinheiten 8a und 8b können beispielsweise auch als Redundanz im Falle eines Ausfalles des Steuergerätes 8 verwendet werden, um einen Notlauf zu ermöglichen, der die Verfügbarkeit im Fehlerfall erhöht.

Das Steuergerät 8 weist vorzugsweise Signaleingänge zur Erfassung von Betriebsparametern des Fahrzeugs auf. Insbesondere werden im Steuergerät 8 die Raddrehzahlen n_{VL}, n_{VR}, n_{HL}, und n_{HR} sowie die fahrdynamischen Größen, wie der Lenkwinkel LW, die Dreh- bzw. Gierrate r und die Querbeschleunigung a_{y} erfasst.

Über die fahrdynamischen Größen LW, a_{y} und r berechnet das Steuergerät 8, ob das Fahrzeug die vom Fahrer vorgegebene Bahnkurve stabil durchfährt. Ist beispielsweise der Betrag der gemessenen Ist-Drehrate r höher als eine berechnete erste Soll-Drehrate, wird auf ein Übersteuern des Fahrzeuges geschlossen. Ist beispielsweise der Betrag der gemessenen Ist-Drehrate r geringer als eine berechnete zweite Soll-Drehrate, wird auf ein Untersteuern des Fahrzeuges geschlossen. Die erste und die zweite Soll-Drehrate können auch gleich sein.

Erkennt das Steuergerät 8 ein Untersteuern des Fahrzeuges, erhöht es das Sperrmoment der regelbaren Kupplung der Längssperre 1b. Dadurch erhält die Vorderachse 2 mehr Seitenführung. Die Lenkfähigkeit des Fahrzeugs wird verbessert. Das Untersteuern wird auf ein neutrales Fahrverhalten zurückgeführt.

Erkennt das Steuergerät 8 ein Übersteuern des Fahrzeuges, erhöht es das Sperrmoment der regelbaren Kupplung der Längssperre 1a. Dadurch übernimmt die Vorderachse 2 mehr Antriebsmoment und entlastet die Hinterachse 3. Die Hinterachse 3 erhält mehr Seitenführung. Das Übersteuern wird auf ein neutrales Fahrverhalten zurückgeführt.

Das elektronische Steuergerät 8 kann mit einem vom Fahrer manuell betätigbaren Einstellmittel, hier in Form eines Potentiometers 10, zur individuellen Veränderung der Drehmomentverteilung verbunden sein. Hierdurch kann beispielsweise eine kontinuierliche Veränderung zwischen einem mehr untersteuernden oder mehr übersteuernden Fahrverhalten ermöglicht werden.

Durch gezielte Regelung der Längssperren gemäß der Erfindung kann ein Fahrzeug bedarfsweise allradgetrieben (mit einer beliebigen Verhältnisaufteilung), vorderradgetrieben und hinterradgetrieben eingesetzt werden.

## Patentansprüche

1. Steuersystem zur variablen Drehmomentverteilung, das mit einem Fahrdynamikregelsystem in Form von einem Antriebsmoment- und Bremsmomentregelsystem überlagert ist für ein zumindest teilweise vierradgetriebenes Fahrzeug mit einer ersten, der Vorderachse zugeordneten regelbaren Längssperre (1a) und mit einer zweiten, der Hinterachse zugeordneten regelbaren Längssperre (1b), wobei eine Antriebseinheit (9) zur Übertragung des Antriebsmoments zwischen den beiden Längssperren (1a, 1b) eingreift und wobei die Längssperren (1a, 1b) mittels eines elektronischen Steuergeräts (8; 8a, 8b) ansteuerbar sind, wobei ein Steuergerät (8; 8a, 8b) vorhanden ist, von dem über die Ansteuerung der Längssperren (1 a, 1b) die Drehmomentverteilung fahrbahnreibwerunabhängig und reifenschlupfunabhängig vornehmbar ist, wobei durch das elektronische Steuergerät (8; 8a, 8b) zusätzliches Drehmoment auf die jeweils schneller drehende Achse aufgeprägt wird.

2. Steuersystem nach Patentanspruch 1, **dadurch gekennzeichnet, dass** das elektronische Steuergerät (8; 8a, 8b) derart ausgestaltet ist, dass die Längssperren im Sinne einer Erhöhung bzw. Reduzierung der von ihnen übertragenen Sperrmomente derart geregelt werden, dass das Fahrzeug ausgehend von einem über- bzw. untersteuernden Zustand wieder in den neutralen Zustand gebracht wird.

3. Steuersystem nach Patentanspruch 1, **dadurch gekennzeichnet, dass** das elektronische Steuergerät (8; 8a, 8b) derart ausgestaltet ist, dass die Längssperren im Sinne einer Erhöhung bzw. Reduzierung der von ihnen übertragenen Sperrmomente derart geregelt werden, dass das Fahrzeug in einen vorgegebenen über- bzw. untersteuernden Zustand gebracht wird.

4. Steuersystem nach einem der vorangehenden Patentansprüche, **dadurch gekennzeichnet, dass** das elektronische Steuergerät (8; 8a, 8b) derart ausgestaltet ist, dass die Drehmomentverteilung in Abhängigkeit von den Radaufstandskräften vornehmbar ist.

5. Steuersystem nach einem der vorangehenden Patentansprüche, **dadurch gekennzeichnet, dass** das elektronische Steuergerät (8; 8a, 8b) derart ausgestaltet ist, dass das Schleppmoment komplett von den Rädern abkoppelbar ist, wenn das Vorliegen einer definierten querdynamisch instabilen Bedingung erkannt wird.

6. Steuersystem nach einem der vorangehenden Patentansprüche, **dadurch gekennzeichnet, dass** das elektronische Steuergerät (8; 8a, 8b) mit einem vom Fahrer manuell betätigbaren Einstellmittel (10) zur individuellen Veränderung der Drehmomentverteilung verbunden ist.

## Claims

1. A control system for variable torque distribution, which is overlaid with a driving dynamics control system in the form of a drive torque and braking torque control system for an at least partially four wheel-drive vehicle with a first controllable centre differential lock (1a) associated with the front axle and with a second controllable centre differential lock (1b) associated with the rear axle, a drive unit (9) for transmitting the drive torque engaging between the two centre differential locks (1a, 1b) and the centre differential locks (1 a, 1 b) being activatable by means of an electronic control apparatus (8; 8a, 8b), wherein a control apparatus (8; 8a, 8b) is present, by means of which the torque distribution can be implemented via the activation of the centre differential locks (1a, 1b) independently of the coefficient of friction of the road and the tyre slip, additional torque being imposed on the respectively more rapidly rotating axle by means of the electronic control apparatus (8; 8a, 8b).

2. A control system according to claim 1, **characterised in that** the electronic control apparatus (8; 8a, 8b) is configured in such a way that the centre differential locks are controlled to increase or reduce the locking torques transmitted by them in such a way that the vehicle, starting from an over-steering or under-steering state, is brought back to the neutral state.

3. A control system according to claim 1, **characterised in that** the electronic control apparatus (8; 8a, 8b) is configured in such a way that the centre differential locks are controlled to increase or reduce the locking torques transmitted by them in such a way that the vehicle is brought to a predetermined over-steering or under-steering state.

4. A control system according to any one of preceding claims, **characterised in that** the electronic control apparatus (8; 8a, 8b) is configured in such a way that the torque distribution can be implemented as a function of the wheel contact forces.

5. A control system according to any one of preceding claims, **characterised in that** the electronic control apparatus (8; 8a, 8b) is configured in such a way that the drag torque can be completely decoupled from the wheels if the presence of a defined transverse dynamically unstable condition is recognised.

6. A control system according to any one of preceding claims, **characterised in that** the electronic control apparatus (8; 8a, 8b) is connected to an adjustment means (10) which can be manually actuated by the driver to individually change the torque distribution.

## Revendications

1. Système de commande pour la répartition variable du couple, combiné à un système de régulation de la dynamique de roulage sous la forme d'un système de régulation du couple moteur et du couple de freinage, pour un véhicule entraîné au moins en partie par quatre roues motrices, ayant un premier verrou longitudinal (1a), réglable, associé à l'essieu avant, et un second verrou longitudinal (1b), réglable, associé à l'essieu arrière, une unité motrice (9) intervenant pour transmettre le couple d'entraînement entre les deux verrous longitudinaux (1a, 1b) et les verrous longitudinaux (1a, 1b) sont commandés par un appareil de commande électronique (8 ; 8a, 8b),
un appareil de commande (8 ; 8a, 8b) étant prévu pour assurer par la commande des verrous longitudinaux (1a, 1b) la répartition du couple de manière indépendante du coefficient d'adhérence de la chaussée et de façon indépendante du patinage des pneumatiques,
l'appareil de commande électronique (8 ; 8a, 8b) appliquant un couple supplémentaire à l'essieu tournant respectivement le plus rapidement.

2. Système de commande selon la revendication 1,
**caractérisé en ce que**
l'appareil de commande électronique (8 ; 8a, 8b) est réalisé pour que les verrous longitudinaux soient régulés dans le sens d'une augmentation ou d'une réduction du couple de blocage qu'ils transmettent, **en ce que** partant d'un état de sous-virage ou de survirage, le véhicule est de nouveau remis à l'état neutre.

3. Système de commande selon la revendication 1,
**caractérisé en ce que**
l'appareil de commande électronique (8 ; 8a, 8b) est réalisé pour que les verrous longitudinaux soient régulés dans le sens d'une augmentation ou d'une réduction du couple de blocage qu'ils transmettent de façon que le véhicule soit mis dans un état prédéfini de survirage ou de sous-virage.

4. Système de commande selon l'une des revendications précédentes,
**caractérisé en ce que**
l'appareil de commande électronique (8 ; 8a, 8b) est réalisé pour que la répartition du couple se fasse en fonction des forces d'appui des roues.

5. l'une des revendications précédentes,
**caractérisé en ce que**
l'appareil électronique (8 ; 8a, 8b) est réalisé pour que le couple de traînée soit découplé complètement des roues lorsqu'est détectée l'existence d'une condition dynamique transversale instable, définie.

6. l'une des revendications précédentes,
**caractérisé en ce que**
l'appareil électronique (8 ; 8a, 8b) est relié à un moyen de réglage (10) axialement mécanique par le conducteur pour modifier de manière individuelle la répartition du couple.
